# FASCICULE DE BREVET EUROPEEN

(11) **EP 2 477 803 B1**
(45) Date de publication et mention de la délivrance du brevet: **21.08.2013**
(21) Numéro de dépôt: 10754722.6
(22) Date de dépôt: 10.09.2010
(51) Int. Cl.: B60C 19/12, B29C 73/22, C08L 27/00, C08L 27/06, C08L 57/02, C08L 93/00

(54) **BANDAGE PNEUMATIQUE AVEC COUCHE AUTO-OBTURANTE ET COUCHE DE PROTECTION INTEGREES**
REIFEN MIT INEGRIERTER SELBSVERSCHLIESSENDER SCHICHT UND INTEGRIERTER SCHUTZSCHICHT
PNEUMATIC TIRE WITH INTEGRATED SELF-SEALING LAYER AND PROTECTION LAYER

(30) Priorité: 15.09.2009 FR 0956318
(43) Date de publication de la demande: 25.07.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: GREIVELDINGER, Marc, F-63140 Chatel Guyon (FR); MERINO LOPEZ, Jose, F-63200 Riom (FR); AHOUANTO, Michel, F-63530 Enval (FR); PIALOT, Frédéric, F-63190 Moissat (FR)
(74) Mandataire: Dequire, Philippe Jean-Marie Denis
(86) Numéro de dépôt international: PCT/EP2010/063274
(87) Numéro de publication internationale: WO 2011/032886

(56) Documents cités:
- FR-A1- 2 910 478
- FR-A1- 2 916 202
- FR-A1- 2 917 996
- FR-A1- 2 928 299

## Description

### Domaine de l'invention

La présente invention concerne les bandages pneumatiques comportant une couche auto-obturante (« *self sealing* ») disposée sur leur paroi intérieure pour obturer d'éventuelles perforations en service et plus particulièrement de tels bandages pneumatiques dans lesquels la couche auto-obturante est placée dans l'ébauche du bandage pneumatique avant sa vulcanisation.

### Arrière plan technologique

De nombreux documents présentent de tels bandages pneumatiques comportant une couche auto-obturante sur tout ou partie de leur surface intérieure.

A titre d'exemple, le document US 4 418 093 présente un procédé pour disposer de façon régulière une couche de matériau auto-obturant sur la paroi intérieure d'un bandage pneumatique vulcanisé par combinaison d'une mise en rotation du bandage pneumatique suivie de mouvements d'oscillations jusqu'à ce que le matériau auto-obturant soit suffisamment réticulé pour ne plus fluer.

Lorsque la couche auto-obturante est disposée dans l'ébauche à cru d'un bandage pneumatique, l'un des problèmes rencontrés est dû à la nature très collante de la couche auto-obturante qui adhère fortement à la membrane de cuisson pendant la phase de vulcanisation. Après la sortie du bandage pneumatique vulcanisé du moule de cuisson, des parties de la couche auto-obturante peuvent rester collées sur la paroi de la membrane et entraîner sa mise au rebut rapide. Pendant cette phase de vulcanisation à haute température, des constituants de la couche auto-obturante peuvent aussi migrer dans la membrane de cuisson ce qui peut également en diminuer la durée de vie. Les agents anti-collants usuellement utilisés tels que les badigeons ou les liquides siliconés sont tout à fait insuffisants pour résoudre ce problème.

Pour résoudre ce problème, le document US 2009/0084482 A1 divulgue un bandage pneumatique avec couche auto-obturante incorporée lors de la fabrication du pneumatique. Ce bandage pneumatique comporte une bande de roulement caoutchouteuse extérieure, un renfort de carcasse, une couche étanche aux gaz disposée intérieurement relativement au renfort de carcasse et une couche de protection disposée le plus intérieurement. Il comporte aussi une couche auto-obturante adjacente à la couche de protection séparable et disposée intérieurement relativement à la couche étanche aux gaz. La couche de protection est un film thermoplastique de nylon ou d'un mélange de nylon et de caoutchouc.

La couche de protection facilite la fabrication du bandage pneumatique en évitant tout contact entre la couche auto-obturante et les outils d'assemblage de l'ébauche du bandage pneumatique. Cette couche est aussi dite séparable, c'est-à-dire qu'elle peut être retirée de la surface de la couche auto-obturante après la vulcanisation du pneumatique sans emporter tout ou partie de celle-ci et sans se déchirer.

### Description de l'invention

L'invention a pour objet un bandage pneumatique similaire à celui précédemment décrit dans lequel la couche de protection est un film constitué d'un polymère thermoplastique chloré et en ce que ledit polymère thermoplastique chloré comprend au moins un additif plastifiant choisi dans le groupe constitué par les copolymères éthylène-acétate de vinyle, les polybutènes, les polyesters, les copolymères chlorure de vinyle-acétate de vinyle, les melitates, le tri allyl cyanurate, les composés acryliques réticulables, les huiles époxydées et leurs mélanges.

Les plastifiants compris dans la liste ci-dessus favorisent une bonne stabilité thermique du film thermoplastique chloré.

De préférence, l'additif plastifiant est un polymère choisi dans le groupe constitué par les copolymères éthylène-acétate de vinyle, les copolymères chlorure de vinyle-acétate de vinyle, les polybutènes, les polyesters, les composés acryliques réticulables et leurs mélanges.

De tels additifs plastifiant polymères ont, de préférence, une masse moléculaire en nombre (Mn) comprise entre 2 000 et 10 000 g/mol.

Pendant la phase de vulcanisation, on a constaté que des films thermoplastiques chloré, tel un film PVC additivé avec comme plastifiant majoritaire du dioctyl adipate (ou autre adipate ou phtalate de faible masse moléculaire), ont leurs propriétés fortement modifiées en raison de la diffusion de ce plastifiant vers les mélanges caoutchouteux adjacents (couche auto-obturante d'un côté, membrane de cuisson de l'autre). Cela peut entraîner l'apparition dans le film thermoplastique de fissures très pénalisantes.

La masse moléculaire des additifs plastifiants polymère doit être suffisante pour que les migrations des ces plastifiants vers la membrane de cuisson ou/et la couche auto obturante adjacente soient limitées au maximum pendant la phase de réticulation du bandage. Lorsque la masse moléculaire devient supérieure à 2 000 g/mol, on constate que la diffusion des additifs plastifiants devient suffisamment ralentie pour ne plus pénaliser la tenue mécanique des films, en revanche, lorsque la masse moléculaire devient supérieure à 10 000 g/mol, les additifs plastifiants ne remplissent plus correctement leur rôle de plastifiant du film thermoplastique.

De préférence, le film thermoplastique chloré comprend en outre au moins un additif secondaire choisi dans le groupe des sels d'étain, des sels de calcium, des sels de baryum, des sels de zinc, des perchlorates, des amines et de leurs mélanges.

Ces additifs secondaires sont des stabilisants thermiques du film thermoplastique et ralentissent très sensiblement la cinétique de dégradation thermique du film chloré. Les sels métalliques cités peuvent avantageusement être utilisés avec des huiles époxydées.

Le film thermoplastique chloré peut aussi comporter un additif choisi dans le groupe des phtalates et des adipates, mais le taux de ces additifs doit être faible, de préférence inférieur à 2 % en poids.

Avantageusement, la masse moléculaire en nombre (Mn) du polymère thermoplastique chloré est supérieure à 50 000 g/mol. Ce polymère est ainsi de très haute masse moléculaire, ce qui diminue le nombre de fonctions labiles et facilite la tenue à haute température du film.

Le polymère thermoplastique chloré peut être choisi dans le groupe des polychlorure de vinyle (PVC), polychlorure de vinylidène (PVDC) et polychlorure de vinyle surchloré (PVCC).

L'épaisseur du film de protection peut être comprise entre 7 et 50 micromètres et préférentiellement entre 10 et 30 micromètres.

Ce dernier point est important, on a en effet constaté que lorsqu'un film a une épaisseur insuffisante, inférieure à 7 µm par exemple, on pouvait constater l'apparition de fissures pendant la phase de conformation du bandage pneumatique, première phase de sa fabrication. Un tel film thermoplastique chloré doit avoir une épaisseur supérieure ou égale à 10 µm pour supporter cette première phase de fabrication.

De tels films peuvent cependant être utilisés en les appliquant lors de la seconde phase de fabrication du bandage, la phase de finition juste avant la vulcanisation.

Comme décrit précédemment, de tels films thermoplastiques permettent de réaliser la confection du bandage pneumatique en supprimant tous les problèmes liés au collant intrinsèquement très fort des couches auto-obturantes. Le film de protection sert de séparation entre la couche auto-obturante d'une part et le tambour d'assemblage puis la membrane de cuisson d'autre part.

Ces formulations de films doivent néanmoins présenter, de façon à pouvoir être utilisables comme films de protection, les caractéristiques suivantes :
■ une contrainte rapportée à la section initiale en extension uniaxiale à 100 % de déformation et température ambiante du film inférieure à 20 MPa ; pour des épaisseurs de l'ordre de 10 à 30 micromètres, ces films sont aisément étirables à température ambiante et ainsi ne perturbent pas les étapes de conformation et de mise en place dans le moule de cuisson du bandage pneumatique ;
■ un allongement rupture supérieur à 90 % en extension uniaxiale et de préférence supérieur à 150 % à température ambiante ; le film peut supporter l'ensemble des sollicitations lors de la fabrication du bandage pneumatique sans se déchirer ou se rompre ; et
■ le film thermoplastique doit pouvoir supporter une montée en température jusqu'à environ 170 à 175°C pendant une dizaine de minutes sans modifications sensibles de ses propriétés et de sa composition pour remplir son rôle dans le cas d'un bandage pneumatique de tourisme.

L'homme de l'art saura ajuster la composition du film de protection de façon à atteindre les niveaux de propriété requis.

Selon un mode de réalisation préférentiel, le film thermoplastique chloré est le seul constituant polymère du film thermoplastique de protection.

Selon un mode de réalisation de l'invention, la couche auto-obturante peut comporter au moins (pce signifiant parties en poids pour cent parties d'élastomère solide) un élastomère thermoplastique styrénique (dit « TPS ») et plus de 200 pce d'une huile d'extension dudit élastomère.

Le TPS peut être l'élastomère majoritaire de la couche auto-obturante.

L'élastomère TPS peut être choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche auto-obturante peut comporter au moins :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 30 pce d'une charge.

L'élastomère diénique insaturé est avantageusement choisi dans le groupe constitué par les polybutadiènes, le caoutchouc naturel, les polyisoprènes de synthèse, les copolymères de butadiène, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

### Description brève des dessins

Tous les détails de réalisation sont donnés dans la description qui suit, complétée par les figures 1 à 3, dans lesquelles :
- la figure 1 représente de manière très schématique (sans respect d'une échelle spécifique), une coupe radiale d'un bandage pneumatique conforme à un mode de réalisation de l'invention ;
- la figure 2 présente en coupe radiale partielle d'une ébauche de pneumatique conforme à un mode de réalisation de l'invention ; et
- la figure 3 présente un schéma d'extrudeuse-mélangeur à vis.

### Description détaillée de modes de réalisation de l'invention

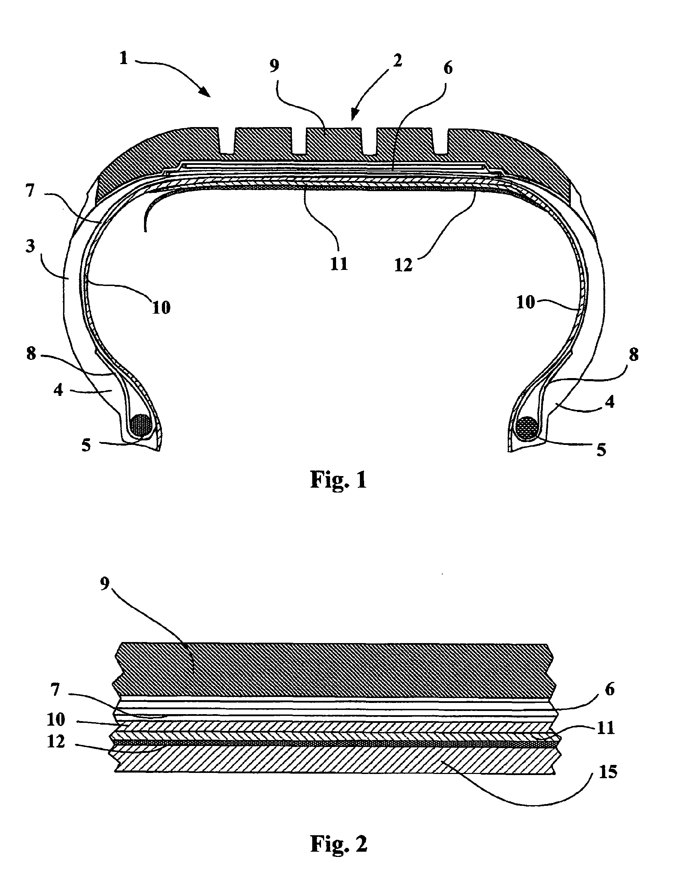

La figure 1 représente de manière schématique une coupe radiale d'un bandage pneumatique ou pneumatique incorporant une couche auto-obturante avec une couche de protection selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est tel que sa paroi interne comporte une couche auto-obturante 11. Conformément à un mode de réalisation préférentiel de l'invention, la couche auto-obturante 11 recouvre la couche étanche 10 dans la zone du sommet 2 du bandage pneumatique. La couche auto-obturante peut aussi se prolonger de la zone sommet jusqu'à mi-flancs (équateurs) du bandage pneumatique, voire au-delà. La couche auto-obturante 11 est recouverte radialement intérieurement par une couche de protection 12.

La couche de protection 12 est un film thermoplastique constitué d'un polymère chloré. A titre d'exemple, un tel film peut être un film de 8 micromètres d'épaisseur réalisé à partir de la matière première Triolin de la société LINPAC.

La couche de protection 12 permet d'éviter à la couche auto-obturante tout contact avec le tambour de fabrication du bandage pneumatique puis avec la membrane de cuisson du moule de vulcanisation.

Le constituant principal du film thermoplastique de la couche de protection est un polymère chloré. Le plus connu de ces polymères est le polychlorure de vinyle ou PVC. Le polychlorure de vinylidène PVDC est l'homopolymère du chlorure de vinylidène et peut convenir de préférence en mélange avec le PVC. On peut aussi utiliser le PVC surchloré ou PVCC qui contient de 65 à 69 % de chlore (au lieu de 56 % pour le PVC.

Pour une application comme couche de protection, il est préférable d'utiliser un polymère de haute masse moléculaire, notamment supérieure à 50 000 g/mol. Cela renforce la résistance du film résultant à haute température.

La température de transition vitreuse du PVC pur est de l'ordre de 75 à 105°C selon les grades. Il est donc nécessaire d'ajouter au polymère PVC ou autre des additifs plastifiants pour abaisser cette température de transition vitreuse en dessous de la température ambiante et obtenir des films extensibles dans toute la gamme des températures d'utilisation.

L'utilisation comme couche de protection demande une possibilité d'utilisation à des températures élevées, celles de la réticulation des bandages pneumatiques, et pendant une durée de plusieurs minutes.

Les plastifiants suivants sont favorables pour une telle utilisation à haute température : des additifs polymères, les huiles époxydées, les mellilates et le tri allyl cyanurate.

Plusieurs additifs polymères suivants peuvent être utilisés comme plastifiants.

On trouve notamment les copolymères éthylène-acétate de vinyle ou EVA et les copolymères chlorure de vinyle-acétate de vinyle ou VC/VA

Des exemples de VC/VA utilisables sont des copolymères avec un taux de chlorure de vinyle de l'ordre de 80 à 90 % pour obtenir une bonne souplesse.

On peut aussi utiliser des polybutènes qui sont des copolymères d'isoprène et d'isobutylène, des polyesters à base d'acides gras.

Ces additifs plastifiants polymères ont de préférence une masse moléculaire comprise entre 2 000 et 10 000 g/mol pour conserver de bonnes propriétés de plastification tout en étant peu sensibles à la migration à haute température. Leurs teneurs peuvent varier entre 5 et 30 parties pour cent parties en poids de polymère chloré.

Les mellitates peuvent aussi être utilisés comme plastifiants, parmi ceux-ci on note particulièrement les trimellitates et les pyromellitates. Leur taux d'usage peut aller jusqu'à 120 parties.

Le tri allyl cyanurate peut aussi être utilisé pour ses propriétés de stabilisation à haute température.

On peut aussi utiliser comme plastifiant des huiles époxydées, notamment les huiles de soja ou de lin à des taux compris entre 5 et 15 parties.

On peut enfin utiliser comme plastifiants des composés acryliques réticulables.

De préférence, le film thermoplastique chloré comprend en outre un additif secondaire choisi dans le groupe des sels d'étain, des sels de calcium, des sels de baryum, des sels de zinc, des perchlorates, des amines et de leurs mélanges.

Ces additifs secondaires sont des stabilisants thermiques du film thermoplastique et ralentissent très sensiblement la cinétique de dégradation thermique du film chloré. Les sels métalliques cités peuvent avantageusement être utilisés avec des huiles époxydées.

Ces additifs secondaires sont utilisés à des taux compris entre 0,1 et 5 parties.

Le film thermoplastique chloré peut aussi comporter un additif usuel choisi dans le groupe des phtalates et des adipates, mais le taux de ces additifs doit être faible, de préférence inférieur à 1 % en poids pour limiter les phénomènes de migration pendant la réticulation du bandage pneumatique.

Selon un mode de réalisation, la couche auto-obturante 11 comporte un élastomère thermoplastique styrénique (dit « TPS ») et plus de 200 pce d'une huile d'extension de l'élastomère. Les élastomères thermoplastiques styréniques sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

L'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, l'élastomère est choisi dans le groupe constitué par les copolymères SEBS, les copolymères SEPS et les mélanges de ces copolymères.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Des exemples de telles couches auto-obturantes et de leurs propriétés sont divulgués dans les documents FR 2 910 382, FR 2 910 478 et FR 2 925 388.

Une telle couche auto-obturante peut être préformée par extrusion d'un profilé plat aux dimensions appropriées pour son application sur un tambour de fabrication. Un exemple de réalisation est présenté dans le document FR 2 925 388.

Selon un autre exemple de réalisation, la couche auto-obturante 11 est constituée d'une composition élastomère comportant au moins, à titre d'élastomère majoritaire (préférentiellement pour plus de 50 pce), un élastomère diénique insaturé, entre 30 et 90 pce d'une résine hydrocarbonée et un plastifiant liquide de Tg inférieure à -20°C, à un taux compris entre 0 et 60 pce (pce signifiant parties en poids pour cent parties d'élastomère solide). Elle a pour autre caractéristique essentielle d'être dépourvue de charge ou, tout au plus, d'en comporter moins de 30 pce.

Par élastomère ou caoutchouc "diénique", on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique "insaturé" (ou "essentiellement insaturé") un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques "saturés" ou "essentiellement saturés" en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquide, l'élastomère diénique insaturé de la composition est par définition solide. De préférence, sa masse moléculaire moyenne en nombre (Mn) est comprise entre 100 000 et 5 000 000, plus préférentiellement entre 200 000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 µm avant injection ; étalonnage de Moore avec des étalons (polyisoprène) ; jeu de 4 colonnes "WATERS" en série ("STYRAGEL" HMW7, HMW6E, et 2 HT6E) ; détection par réfractomètre différentiel ("WATERS 2410") et son logiciel d'exploitation associé ("WATERS EMPOWER").

Plus préférentiellement, l'élastomère diénique insaturé de la composition de la couche auto-obturante est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, l'élastomère diénique insaturé ci-dessus, notamment lorsqu'il s'agit d'un élastomère diénique isoprénique tel que du caoutchouc naturel, est le seul élastomère présent dans la composition auto-obturante. Mais il pourrait aussi, selon d'autres modes de réalisation possibles, être associé à d'autres élastomères (solides) minoritaires en poids, qu'il s'agisse d'élastomères diéniques insaturés (par exemple BR ou SBR) voire saturés (par exemple butyl), ou encore d'élastomères autres que diéniques, par exemple des élastomères thermoplastiques styréniques (TPS), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, cet élastomère diénique insaturé, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

Le deuxième constituant essentiel de la composition auto-obturante est une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de la couche auto-obturante, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 60°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de la couche auto-obturante, la résine hydrocarbonée présente au moins une (quelconque), plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une (quelconque), plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5 et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou résines coupe C₅/ coupe C₉, ou encore par la société Struktol sous dénomination "40 MS" ou "40 NS" ou par la société Exxon Mobil sous dénomination "Escorez" (mélanges de résines aromatiques et/ou aliphatiques).

La composition auto-obturante a pour caractéristique essentielle de comporter en outre, à un taux inférieur à 60 pce (en d'autres termes entre 0 et 60 pce), un agent plastifiant liquide (à 23°C) dit "à basse Tg" dont la fonction est notamment de ramollir la matrice en diluant l'élastomère diénique et la résine hydrocarbonée, améliorant en particulier les performances d'auto-obturation "à froid" (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines hydrocarbonées qui sont par nature solides à température ambiante.

Conviennent notamment des élastomères liquides à faible masse moléculaire moyenne en nombre (Mn), typiquement comprise entre 300 et 90 000, plus généralement entre 400 et 50 000, par exemple sous la forme de caoutchouc naturel dépolymérisé, de BR, SBR ou IR liquides, tels que décrits par exemple dans les documents brevet US 4 913 209, US 5 085 942 et US 5 295 525. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, hydrogénées ou non), les huiles aromatiques ou DAE (*Distillate Aromatic Extracts*), les huiles MES (*Medium Extracted Solvates*), les huiles TDAE (*Treated Distillcate Aromatic Extracts*), les huiles minérales, les huiles végétales (et leurs oligomères, e.g. huiles de colza, soja, tournesol) et les mélanges de ces huiles.

Selon un mode de réalisation particulier, on utilise par exemple une huile du type polybutène, en particulier une huile polyisobutylène (en abrégé "PIB"), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse moléculaire moyenne en nombre (Mn) du plastifiant liquide est préférentiellement comprise entre 400 et 25 000 g/mol, plus préférentiellement encore comprise entre 800 et 10 000 g/mol. Pour des masses Mn trop basses, il existe un risque de migration du plastifiant à l'extérieur de la composition, tandis que des masses trop élevées peuvent entraîner une rigidification excessive de cette composition. Une masse Mn comprise entre 1 000 et 4 000 g/mol s'est avérée constituer un excellent compromis pour les applications visées, en particulier pour une utilisation dans un bandage pneumatique.

La masse moléculaire moyenne en nombre (Mn) du plastifiant peut être déterminée de manière connue, notamment par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses moléculaires moyennes calculées sont relatives à une courbe d'étalonnage réalisée avec des étalons de polystyrène.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction des conditions particulières d'usage de la composition auto-obturante, notamment du bandage pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

La composition de la couche auto-obturante a pour caractéristique essentielle d'être non chargée ou très faiblement chargée, c'est-à-dire de comporter de 0 à moins de 30 pce de charge.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère isoprénique tel que du caoutchouc naturel.

Une quantité trop élevée, notamment supérieure à 30 pce ne permet plus d'atteindre les propriétés minimales requises de souplesse, de déformabilité et d'aptitude au fluage. Pour ces raisons, la composition comporte préférentiellement 0 à moins de 20 pce, plus préférentiellement 0 à moins de 10 pce de charge.

A titre d'exemples de charges connues comme renforçantes par l'homme du métier, on citera notamment des nanoparticules de noir de carbone ou d'une charge inorganique renforçante, ou un coupage de ces deux types de charge.

Comme noirs de carbone, par exemple, conviennent tous les noirs de carbone, notamment les noirs du type HAF, ISAF, SAF, GPF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des microparticules de carbonates de calcium naturels (craie) ou synthétiques, de silicates synthétiques ou naturels (tels que kaolin, talc, mica), de silices broyées, d'oxydes de titane, d'alumines ou encore d'aluminosilicates. A titre d'exemples de charges lamellaires, on peut citer également des particules de graphite. Des charges colorantes ou colorées pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster la formulation de la composition auto-obturante afin d'atteindre les niveaux de propriétés souhaités et adapter la formulation à l'application spécifique envisagée.

Selon un mode de réalisation particulier et avantageux, si une charge renforçante est présente dans la composition auto-obturante, son taux est préférentiellement inférieur à 5 pce (soit compris entre 0 et 5 pce), en particulier inférieur à 2 pce (soit compris entre 0 et 2 pce). De tels taux se sont avérés particulièrement favorables au procédé de fabrication de la composition, tout en offrant à cette dernière d'excellentes performances auto-obturantes. On utilise plus préférentiellement un taux compris entre 0,5 et 2 pce, en particulier lorsqu'il s'agit de noir de carbone.

Les constituants de base de la couche auto-obturante précédemment décrits, à savoir élastomère diénique insaturé, résine plastifiante hydrocarbonée, plastifiant liquide et charge optionnelle sont suffisants à eux seuls pour que la composition auto-obturante remplisse totalement sa fonction anti-crevaison vis-à-vis des bandages pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel, la composition auto-obturante comporte en outre un système de réticulation de l'élastomère diénique insaturé. Ce système de réticulation est préférentiellement un système de réticulation à base de soufre, en d'autres termes un système dit "de vulcanisation".

Le système de vulcanisation à base de soufre comporte de préférence, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG.

Dans ce système de vulcanisation, pour une performance d'auto-obturation optimale, le taux de soufre est de préférence compris entre 0,1 et 1,5 pce, en particulier entre 0,2 et 1,2 pce (par exemple entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit système ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce. Si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Selon un autre mode de réalisation avantageux, le système de vulcanisation ci-dessus peut être dépourvu de zinc ou d'oxyde de zinc (connus comme activateurs de vulcanisation).

Selon un autre mode de réalisation possible de la couche auto-obturante, on peut aussi utiliser un donneur de soufre en lieu et place du soufre lui-même ; les donneurs de soufre sont bien connus de l'homme du métier. Typiquement, la quantité d'un tel donneur de soufre sera de préférence ajustée entre 0,5 et 10 pce, plus préférentiellement entre 1 et 5 pce, de manière à atteindre les taux de soufre équivalents préférentiels indiqués précédemment.

Après cuisson, un système de vulcanisation tel que décrit ci-dessus apporte une cohésion suffisante à la composition, sans lui conférer une vulcanisation véritable : la réticulation mesurable, via une méthode de gonflement classique connue de l'homme du métier, avoisine en fait le seuil de détection.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

La composition de la couche auto-obturante précédemment décrite peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante, lorsqu'elle comporte un système de vulcanisation, peut être préparée selon un procédé comportant les étapes suivantes :
a) on fabrique dans un premier temps un masterbatch comportant au moins l'élastomère diénique insaturé et entre 30 et 90 pce de la résine hydrocarbonée, en mélangeant ces différents composants dans un mélangeur, à une température ou jusqu'à une température dite "température de mélangeage à chaud" ou "première température" qui est supérieure à la température de ramollissement de la résine hydrocarbonée ;
b) puis on incorpore audit masterbatch au moins le système de réticulation, en mélangeant le tout, dans le même mélangeur ou dans un mélangeur différent, à une température ou jusqu'à une température dite "seconde température" qui est maintenue inférieure à 100°C, pour l'obtention de ladite composition auto-obturante.

Les première et seconde températures ci-dessus sont bien entendues celles du masterbatch et de la composition auto-obturante, respectivement, mesurables in situ et non pas les températures de consigne des mélangeurs eux-mêmes.

Par "masterbatch" (ou "mélange-maître") doit être entendu ici, par définition, le mélange d'au moins l'élastomère diénique et de la résine hydrocarbonée, mélange précurseur de la composition auto-obturante finale, prête à l'emploi.

Le plastifiant liquide peut être incorporé à tout moment, en tout ou partie, notamment au cours de la fabrication du masterbatch lui-même (dans ce cas, avant, pendant ou après incorporation de la résine hydrocarbonée dans l'élastomère diénique), "à chaud" (c'est-à-dire à température supérieure à la température de ramollissement de la résine) comme à une température plus basse, ou par exemple après la fabrication du masterbatch (dans ce cas, avant, pendant ou après ajout du système de réticulation).

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante, cette composition pouvant comporter des taux élevés de résine hydrocarbonée sans nécessiter notamment l'emploi d'un plastifiant liquide à un taux particulièrement élevé.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

On préfère introduire, au moins en partie, le plastifiant liquide au cours de l'étape a) de fabrication du masterbatch lui-même, plus préférentiellement dans ce cas soit en même temps que la résine hydrocarbonée, soit après introduction de cette dernière. Selon un mode de réalisation particulièrement avantageux, un mélange de la résine hydrocarbonée et du plastifiant liquide pourra être préparé préalablement à l'incorporation dans l'élastomère diénique.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

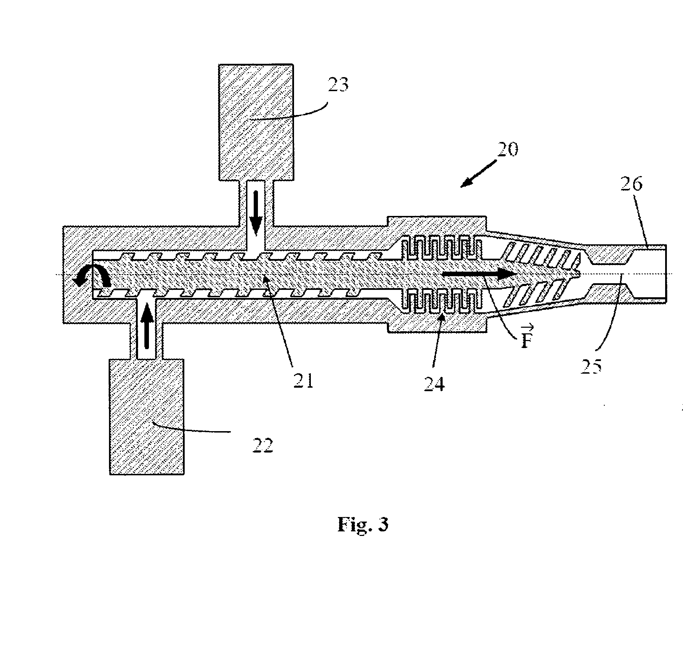

L'étape a) de fabrication du masterbatch est réalisée de préférence dans un mélangeur-extrudeur à vis tel que schématisé par exemple de manière simple à la figure 3.

On voit sur cette figure 3 un mélangeur-extrudeuse à vis 20 comportant essentiellement une vis (par exemple une mono-vis) d'extrusion 21, une première pompe de dosage 22 pour l'élastomère diénique (solide) et au moins une deuxième pompe de dosage 23 pour la résine (solide ou liquide) et le plastifiant liquide. La résine hydrocarbonée et le plastifiant liquide peuvent être introduits par exemple au moyen d'une pompe de dosage unique, s'ils ont déjà été mélangés préalablement, ou bien être introduits séparément au moyen d'une deuxième pompe et troisième pompe (troisième pompe non représentée sur la figure 3, pour simplification), respectivement. Les pompes de dosages 22, 23 permettent de monter en pression tout en conservant la maîtrise du dosage et les caractéristiques initiales des matériaux, la dissociation des fonctions de dosages (élastomère, résine et plastifiant liquide) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie 24 dite "hacheur-homogénéisateur", zone à la sortie de laquelle le masterbatch final 25 ainsi obtenu, progressant dans le sens de la flèche F, est finalement extrudé à travers une filière 26 permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion 20 pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de la couche auto-obturante dans des conditions industrielles satisfaisantes, sans risque de pollution des outils due à un collage parasite de la composition sur les parois des mélangeurs.

La couche étanche 10 (d'épaisseur 0,7 à 0,8 mm) dans un mode de réalisation particulier est à base de caoutchouc butyl et présente une formulation conventionnelle pour une « gomme intérieure » ("inner liner") qui définit usuellement, dans un bandage pneumatique conventionnel, la face radialement intérieure du bandage destinée à protéger l'armature de carcasse de la diffusion d'air provenant de l'espace intérieur au bandage pneumatique. Cette couche 10 étanche à l'air permet donc le gonflement et le maintien sous pression du bandage pneumatique 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

Le bandage pneumatique de la figure 1 peut être fabriqué, comme l'indique la figure 2, en intégrant une couche auto-obturante 11 dans une ébauche non vulcanisée de bandage pneumatique 1 en utilisant un tambour de fabrication et les autres techniques usuelles dans la fabrication des bandages pneumatiques. Plus précisément, la couche de protection 12 disposée radialement le plus à l'intérieur est appliquée en premier sur le tambour de fabrication 15. Cette couche de protection 12 peut être enroulée tout autour du tambour de fabrication 15 puis soudée. On peut aussi mettre en place un manchon de protection soudé au préalable. On applique ensuite, successivement, tous les autres composants usuels du bandage pneumatique.

En faisant référence à la figure 2, la couche auto-obturante 11 est disposée directement sur la couche de protection 12. Cette couche a été au préalable pré-formée par toute technique connue, par exemple extrusion ou calandrage. Son épaisseur est préférentiellement supérieure à 0,3 mm, plus préférentiellement comprise entre 0,5 et 10 mm (en particulier pour des bandages pneumatiques de véhicules de tourisme entre 1 et 5 mm). La couche étanche 10 est alors mise en place sur la couche auto-obturante, suivie par la nappe carcasse 8.

Dans un procédé de fabrication deux temps, l'ébauche de bandage pneumatique est alors conformée pour prendre la forme d'un tore. La couche de protection 12 constituée d'une composition à base d'un film polymère thermoplastique chloré a une rigidité suffisamment faible, une extensibilité uniaxiale et biaxiale suffisantes et est suffisamment liée à la surface de la couche auto-obturante en raison du collant de celle-ci pour suivre les mouvements de l'ébauche de bandage pneumatique sans se décoller ni se déchirer.

Après la conformation, les nappes sommet et la bande de roulement sont mises en place sur l'ébauche du bandage pneumatique. L'ébauche ainsi achevée est placée dans un moule de cuisson et est vulcanisée. Pendant la vulcanisation, la couche de protection protège la membrane de cuisson du moule de tout contact avec la couche auto-obturante.

A la sortie du moule de cuisson, la couche de protection 12 reste attachée à la couche auto-obturante 11. Cette couche de protection ne comporte aucune fissure ni déchirure et se décolle sans aucune difficulté de la membrane de cuisson.

Le bandage pneumatique de la figure 1 peut aussi être fabriqué en utilisant un noyau rigide imposant la forme de la cavité intérieure du bandage. Dans ce procédé, on applique alors en premier la couche de protection sur la surface du noyau, puis l'ensemble des autres constituants du bandage pneumatique. L'application sur le noyau est réalisée dans l'ordre requis par l'architecture finale. Les constituants du bandage pneumatique sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchouteuses. Le pneumatique peut être moulé et vulcanisé comme exposé dans le brevet US 4 895 692. La présence de la couche de protection permet, comme dans le cas de la membrane de cuisson, de séparer aisément le bandage pneumatique du noyau à l'issue de la phase de vulcanisation.

La couche auto-obturante 10 présentée à la figure 1 correspond au second mode de réalisation décrit précédemment. Cette couche est constituée d'une composition auto-obturante comportant les trois constituants essentiels que sont du caoutchouc naturel (100 pce), environ 50 pce de résine hydrocarbonée ("Escorez 2101" de la société Exxon Mobil - point de ramollissement égal à environ 90°C) et environ 15 pce de polybutadiène liquide ("Ricon 154" de la société Sartomer Cray Valley - Mn égale à 5200 environ) ; elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 3 (déjà commentée précédemment) ; le mélange des trois constituants de base (NR, résine et plastifiant liquide) a été réalisé à une température (comprise entre 100 et 130°C) supérieure à la température de ramollissement de la résine. L'extrudeuse utilisée comportait deux alimentations (trémies) différentes (NR d'une part, résine et plastifiant liquide d'autre part préalablement mélangés à un température de 130 à 140°C environ) et une pompe d'injection liquide sous pression pour le mélange résine/ plastifiant liquide (injecté à une température de 100 à 110°C environ) ; quand l'élastomère, la résine et le plastifiant liquide sont ainsi intimement mélangés, on a constaté que le pouvoir collant parasite de la composition diminuait de manière très significative.

Des résultats similaires ont été obtenus en utilisant comme couche auto-obturante une composition comportant un élastomère thermoplastique styrénique TPS, telle que précédemment décrite.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

La couche auto-obturante 11, disposée donc entre la couche étanche 10 et la cavité du pneumatique, permet de procurer au pneumatique une protection efficace contre les pertes de pression dues aux perforations accidentelles, en permettant l'obturation automatique de ces perforations.

Si un corps étranger tel qu'un clou traverse la structure du bandage pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Un problème particulier peut être rencontré lors du retrait du corps étranger après un roulage plus ou moins long. Dans un tel cas, lors du roulage, le clou ou corps étranger est soumis à de fortes contraintes ce qui élargit la taille de la fissure initiale dans la paroi du bandage pneumatique. En conséquence, lorsque le retrait du corps étranger est effectif, le matériau de la couche auto-obturante, poussé par la pression de gonflage du bandage pneumatique, peut traverser toute la paroi du bandage pneumatique pour former une saillie ou bouchon à l'extérieur. Ce bouchon obture usuellement de façon satisfaisante la fuite mais il est très exposé à l'extérieur du bandage pneumatique et son arrachement est susceptible d'entraîner une mise à plat progressive ou instantanée du bandage pneumatique. Une autre conséquence de la formation d'un bouchon est de diminuer la quantité de matériau de cette couche auto-obturante à l'intérieur du bandage pneumatique, cela nuit à l'efficacité de cette couche.

Lorsqu'un film thermoplastique, tel ceux comportant un polymère thermoplastique chloré, est placé sur la surface de la couche auto-obturante du côté de la cavité interne du bandage pneumatique, ce film thermoplastique renforce mécaniquement la couche auto-obturante et favorise le confinement du matériau auto-obturant à l'intérieur de la paroi du bandage pneumatique. La fissure n'est alors pas entièrement traversée par le matériau de la couche auto-obturante et il n'y pas de formation de bouchon à l'extérieur. La très faible rigidité en extension de ces film de protection leur permet d'envelopper les corps étrangers perforants sans diminuer l'efficacité de la couche auto-obturante. On observe ainsi une véritable synergie entre la couche auto-obturante et le film de protection comportant le polymère thermoplastique chloré.

Lors d'essais, des bandages pneumatiques de type tourisme, de dimension 205/55 R16 (marque Michelin, "Energy 3") ont été testés. Ces bandages pneumatique intègrent comme précédemment décrit une couche auto-obturante 11 recouverte par un film de protection comportant un polymère thermoplastique de type PVC additivé 12. La couche auto-obturante a une épaisseur de 3 mm.

Sur un des bandages pneumatiques monté et gonflé, huit perforations de 5 mm de diamètre ont été réalisées, à travers la bande de roulement et le bloc sommet d'une part, les flancs d'autre part, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sur un autre bandage pneumatique, on a procédé de la même façon en laissant cette fois en place les objets perforants, pendant une semaine. Le même excellent résultat a été obtenu.

Sans composition auto-obturante et dans les mêmes conditions que ci-dessus, le bandage pneumatique ainsi perforé perd sa pression en moins d'une minute, devenant totalement inapte au roulage.

On a conduit d'autres part des tests d'endurance sur des bandages pneumatiques conformes à l'invention, identiques aux précédents, mais ayant roulé 750 km, jusqu'à une vitesse de 150 km/h, en laissant cette fois en place les poinçons dans leurs perforations. Après extraction des poinçons (ou expulsion de ces derniers suite au roulage), ces bandages pneumatiques de l'invention ont résisté au roulage sur volant sans perte de pression, dans les mêmes conditions que précédemment (distance parcourue de 1 500 km à une vitesse de 150 km/h et sous une charge nominale de 400 kg).

L'invention n'est pas limitée aux exemples décrits et représentés et diverses modifications peuvent y être apportées sans sortir de son cadre défini par les revendications annexées.

## Revendications

1. Bandage pneumatique avec couche auto-obturante incorporée comportant une bande de roulement caoutchouteuse extérieure, un renfort de carcasse, une couche étanche aux gaz disposée intérieurement relativement au renfort de carcasse, une couche de protection disposée le plus intérieurement et une couche auto-obturante adjacente à la couche de protection et disposée intérieurement relativement à la couche étanche aux gaz, **caractérisé en ce que** ladite couche de protection est un film constitué d'un polymère thermoplastique chloré et **en ce que** ledit polymère thermoplastique chloré comprend au moins un additif plastifiant choisi dans le groupe constitué par les copolymères éthylène-acétate de vinyle, les polybutènes, les polyesters, les copolymères chlorure de vinyle-acétate de vinyle, les mellitates, le tri allyl cyanurate, les huiles époxydées, les composés acryliques réticulables et leurs mélanges.

2. Bandage pneumatique selon la revendication 1, dans lequel l'additif plastifiant est un polymère choisi dans le groupe des copolymères éthylène-acétate de vinyle, les copolymères chlorure de vinyle-acétate de vinyle, les polybutènes, les polyesters, les composés acryliques réticulables et leurs mélanges.

3. Bandage pneumatique selon la revendication 2, dans lequel l'additif plastifiant polymère a une masse moléculaire en nombre (Mn) comprise entre 2 000 et 10 000 g/mol.

4. Bandage pneumatique selon l'une quelconque des revendications précédentes, dans lequel le polymère thermoplastique chloré comprend en outre un additif secondaire choisi dans le groupe des sels d'étain, des sels de calcium, des sels de baryum, des sels de zinc, des perchlorates, des amines et de leurs mélanges.

5. Bandage pneumatique selon l'une quelconque des revendications précédentes, dans lequel le polymère thermoplastique chloré comprend en outre un additif choisi dans le groupe des adipates et des phtalates.

6. Bandage pneumatique selon la revendication 5, dans lequel le taux de l'additif choisi dans le groupe des adipates et des phtalates est inférieur à 2 % en poids.

7. Bandage pneumatique selon l'une quelconque des revendications précédentes, dans lequel la masse moléculaire en nombre (Mn) du polymère thermoplastique chloré est supérieure à 50 000 g/mol.

8. Bandage pneumatique selon l'une quelconque des revendications précédentes, dans lequel le polymère thermoplastique chloré est choisi dans le groupe des polychlorure de vinyle (PVC), polychlorure de vinylidène (PVDC) et polychlorure de vinyle surchloré (PVCC).

9. Bandage pneumatique selon l'une quelconque des revendications précédentes, tel que l'épaisseur du film thermoplastique de protection est comprise entre 7 et 50 micromètres.

10. Bandage pneumatique selon l'une quelconque des revendications précédentes, dans lequel la contrainte rapportée à la section initiale d'extension à 100 % de déformation uniaxiale et température ambiante est inférieure à 20 MPa.

11. Bandage pneumatique selon l'une quelconque des revendications précédentes, dans lequel l'allongement rupture en extension uniaxiale et température ambiante du film thermoplastique est supérieur à 90 %.

12. Bandage pneumatique selon l'une quelconque des revendications précédentes, dans lequel la couche auto-obturante comporte au moins (pce signifiant parties en poids pour cent parties d'élastomère) un élastomère thermoplastique styrénique (dit « TPS ») et plus de 200 pce d'une huile d'extension dudit élastomère.

13. Bandage pneumatique selon la revendication 12, dans lequel le TPS est l'élastomère majoritaire de la couche auto-obturante.

14. Bandage pneumatique selon l'une quelconque des revendications 12 et 13, dans lequel l'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

15. Bandage pneumatique selon la revendication 14, dans lequel l'élastomère TPS est choisi dans le groupe constitué par les copolymères SEBS, les copolymères SEPS et les mélanges de ces copolymères.

16. Bandage pneumatique selon l'une quelconque des revendications précédentes, dans lequel la couche auto-obturante comporte au moins (pce signifiant parties en poids pour cent parties d'élastomère solide) :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 30 pce d'une charge.

17. Bandage pneumatique selon la revendication 16, dans lequel l'élastomère diénique insaturé est choisi dans le groupe constitué par les polybutadiènes, le caoutchouc naturel, les polyisoprènes de synthèse, les copolymères de butadiènes, les copolymères d'isoprène et les mélanges de tels élastomères.

## Patentansprüche

1. Luftreifen mit eingebauter selbstversiegelnder Schicht, umfassend eine äußere kautschukartige Lauffläche, eine Karkassenverstärkung, eine gasdichte Schicht, die bezüglich der Karkassenverstärkung innen angeordnet ist, eine Schutzschicht, die ganz innen angeordnet ist, und eine selbstversiegelnde Schicht, die der Schutzschicht benachbart ist und bezüglich der gasdichten Schicht innen angeordnet ist, **dadurch gekennzeichnet, dass** die Schutzschicht ein Film ist, der aus einem chlorhaltigen thermoplastischen Polymer gebildet ist, und dass das chlorhaltige thermoplastische Polymer wenigstens ein Weichmacheradditiv enthält, das aus der Gruppe gewählt ist, die aus Vinylethylenacetat-Copolymeren, Polybuten, Polyestern, Vinyl-Vinylacetat-Chlor-Copolymeren, Mellitaten, Trialyl-Cyanurat, epoxierten Ölen, vernetzbaren Acrylverbindungen und ihren Gemischen gebildet ist.

2. Luftreifen nach Anspruch 1, wobei das Weichmacheradditiv ein Polymer ist, das aus der Gruppe der Vinylethylenacetat-Copolymere, Vinyl-Vinylacetat-Chlor-Polymere, Polybutene, Polyester, vernetzbaren Acrylverbindungen und ihren Gemischen gewählt ist.

3. Luftreifen nach Anspruch 2, wobei das Polymer-Weichmacheradditiv eine zahlenmittlere Molmasse (Mn) im Bereich von 2000 bis 10000 g/mol hat.

4. Luftreifen nach einem der vorhergehenden Ansprüche, wobei das chlorhaltige thermoplastische Polymer außerdem ein sekundäres Additiv enthält, das aus der Gruppe der Zinnsalze, Calciumsalze, Bariumsalze, Zinksalze, Perchloraten, Aminen und ihren Gemischen gewählt ist.

5. Luftreifen nach einem der vorhergehenden Ansprüche, wobei das chlorhaltige thermoplastische Polymer außerdem ein Additiv enthält, das aus der Gruppe der Adipate und der Phthalate gewählt ist.

6. Luftreifen nach Anspruch 5, wobei der Anteil des aus der Gruppe der Adipate und der Phthalate gewählten Additivs kleiner als 2 Gew.-% ist.

7. Luftreifen nach einem der vorhergehenden Ansprüche, wobei die zahlenmittlere Molmasse (Mn) des chlorhaltigen thermoplastischen Polymers größer als 50000 g/mol ist.

8. Luftreifen nach einem der vorhergehenden Ansprüche, wobei das chlorhaltige thermoplastische Polymer aus der Gruppe der Polyvinylchloride (PVC), Polyvinylidenchloride (PVDC) und nachchlorierten Polyvinylchloride (PVCC) gewählt ist.

9. Luftreifen nach einem der vorhergehenden Ansprüche, derart, dass die Dicke des thermoplastischen Schutzfilms im Bereich von 7 bis 50 Mikrometern liegt.

10. Luftreifen nach einem der vorhergehenden Ansprüche, wobei die auf den Anfangsquerschnitt bezogene Dehnspannung bei 100 % uniaxialer Verformung und Umgebungstemperatur weniger als 20 MPa beträgt.

11. Luftreifen nach einem der vorhergehenden Ansprüche, wobei die Bruchdehnung bei uniaxialer Erstreckung und Umgebungstemperatur des thermoplastischen Films größer als 90 % ist.

12. Luftreifen nach einem der vorhergehenden Ansprüche, wobei die selbstversiegelnde Schicht wenigstens (wobei phe Gewichtsanteile pro hundert Teile festes Elastomer bedeutet) ein thermoplastisches Styrol-Elastomer (genannt "TPS") und mehr als 200 phe eines Strecköls des Elastomers enthält.

13. Luftreifen nach Anspruch 12, wobei das TPS das hauptsächliche Elastomer in der selbstversiegelnden Schicht ist.

14. Luftreifen nach einem der Ansprüche 12 und 13, wobei das TPS-Elastomer aus der Gruppe gewählt ist, die gebildet ist durch Styrol/Butadien/Styrol-BlockCopolymere (SBS), Styrol/Isopren/Styrol-Block-Copolymere (SIS), Styrol/Isopren/Butadien/Styrol-Block-Co-polymere (SIBS), Styrol/Ethylen/Butylen/Styrol-BlockCopolymere (SBES), Styrol/Ethylen/Propylen/Styrol-Block-Copolymere (SEPS), Styrol/Ethylen/Ethylen/Propylen/Styrol-Block-Copolymere (SEEPS) und Gemische dieser Copolymere gebildet ist.

15. Luftreifen nach Anspruch 14, wobei das TPS-Elastomer aus der Gruppe gewählt ist, die gebildet ist aus den SEBS-Copolymeren, den SEPS-Copolymeren und den Gemischen dieser Copolymere.

16. Luftreifen nach einem der vorhergehenden Ansprüche, wobei die selbstversiegelnde Schicht wenigstens (wobei phe Gewichtsanteile pro hundert Teile festes Elastomer bedeutet) umfasst:
(a) als Hauptelastomer ein Elastomer auf Basis von ungesättigtem Dien;
(b) zwischen 30 und 90 phe eines Kohlenstoffwasserstoffharzes;
(c) einen flüssigen Weichmacher, dessen Tg (Glasübergangstemperatur) weniger als -20 °C bei einem Gewichtsanteil im Bereich von 0 bis 60 phe beträgt; und
(d) 0 bis wenigstens 30 phe eines Füllstoffs.

17. Luftreifen nach Anspruch 16, wobei das Elastomer auf Basis von ungesättigtem Dien aus der Gruppe gewählt ist, die durch Polybutadiene, Naturkautschuk, synthetisierte Polyisoprene, Butadien-Copolymere, Isopren-Copolymere und Gemische dieser Elastomere gebildet ist.

## Claims

1. Pneumatic tyre with built-in self-sealing layer comprising an outer rubbery tread, a carcass reinforcement, a gastight layer positioned on the inside relative to the carcass reinforcement, a protective layer positioned innermost and a self-sealing layer adjacent to the protective layer and positioned on the inside relative to the gastight layer, **characterized in that** said protective layer is a film constituted of a chlorinated thermoplastic polymer and **in that** said chlorinated thermoplastic polymer comprises at least one plasticizing additive chosen from the group formed by ethylene/vinyl acetate copolymers, polybutenes, polyesters, vinyl chloride/vinyl acetate copolymers, mellitates, triallyl cyanurate, epoxidized oils, crosslinkable acrylic compounds, and mixtures thereof.

2. Pneumatic tyre according to Claim 1, in which the plasticizing additive is a polymer chosen from the group of ethylene/vinyl acetate copolymers, vinyl chloride/vinyl acetate copolymers, polybutenes, polyesters, crosslinkable acrylic compounds, and mixtures thereof.

3. Pneumatic tyre according to Claim 2, in which the polymer plasticizing additive has a number-average molecular weight (Mₙ) of between 2000 and 10 000 g/mol.

4. Pneumatic tyre according to any one of the preceding claims, in which the chlorinated thermoplastic polymer also comprises a secondary additive chosen from the group of tin salts, calcium salts, barium salts, zinc salts, perchlorates, amines and mixtures thereof.

5. Pneumatic tyre according to any one of the preceding claims, in which the chlorinated thermoplastic polymer also comprises an additive chosen from the group of adipates and phthalates.

6. Pneumatic tyre according to Claim 5, in which the content of the additive chosen from the group of adipates and phthalates is less than 2% by weight.

7. Pneumatic tyre according to any one of the preceding claims, in which the number-average molecular weight (Mₙ) of the chlorinated thermoplastic polymer is greater than 50 000 g/mol.

8. Pneumatic tyre according to any one of the preceding claims, in which the chlorinated thermoplastic polymer is chosen from the group of polyvinyl chloride (PVC), polyvinylidene chloride (PVDC) and chlorinated polyvinyl chloride (CPVC).

9. Pneumatic tyre according to any one of the preceding claims, such that the thickness of the protective thermoplastic film is between 7 and 50 micrometres.

10. Pneumatic tyre according to any one of the preceding claims, in which the stress relative to the initial cross section in extension at 100% uniaxial strain and at ambient temperature is less than 20 MPa.

11. Pneumatic tyre according to any one of the preceding claims, in which the elongation at break in uniaxial extension and at ambient temperature of the thermoplastic film is greater than 90%.

12. Pneumatic tyre according to any one of the preceding claims, in which the self-sealing layer comprises at least (phr signifying parts by weight per 100 parts of elastomer) one thermoplastic styrene (TPS) elastomer and more than 200 phr of an extender oil of said elastomer.

13. Pneumatic tyre according to Claim 12, in which the TPS is the predominant elastomer of the self-sealing layer.

14. Pneumatic tyre according to either one of Claims 12 and 13, in which the TPS elastomer is chosen from the group constituted by styrene/butadiene/styrene (SBS), styrene/isoprene/styrene (SIS), styrene/isoprene/butadiene/styrene (SIBS), styrene/ethylene/butylene/styrene (SEBS), styrene/ethylene/propylene/styrene (SEPS), and styrene/ethylene/ethylene/propylene/styrene (SEEPS) block copolymers and mixtures of these copolymers.

15. Pneumatic tyre according to Claim 14, in which the TPS elastomer is chosen from the group constituted by SEBS copolymers, SEPS copolymers and mixtures of these copolymers.

16. Pneumatic tyre according to any one of the preceding claims, in which the self-sealing layer comprises at least (phr signifying parts by weight per 100 parts of solid elastomer):
(a) as predominant elastomer, an unsaturated diene elastomer;
(b) between 30 and 90 phr of a hydrocarbon resin;
(c) a liquid plasticizer, the Tg (glass transition temperature) of which is below -20°C, at a weight content between 0 and 60 phr; and
(d) from 0 to less than 30 phr of a filler.

17. Pneumatic tyre according to Claim 16, in which the unsaturated diene elastomer is chosen from the group constituted by polybutadienes, natural rubber, synthetic polyisoprenes, butadiene copolymers, isoprene copolymers and mixtures of such elastomers.
